Europäisches Patentamt

**European Patent Office**

**Office européen des brevets**

(11) Veröffentlichungsnummer: **0 437 798 A2**

# EUROPÄISCHE PATENTANMELDUNG

(21) Anmeldenummer: **90125057.1**

(22) Anmeldetag: **21.12.90**

(51) Int. Cl.5: **B21D 51/26, B23K 37/047**

(30) Priorität: **17.01.90 CH 155/90**

(43) Veröffentlichungstag der Anmeldung:
**24.07.91 Patentblatt 91/30**

(84) Benannte Vertragsstaaten:
**BE CH DE ES FR GB GR IT LI SE**

(71) Anmelder: **ELPATRONIC AG**
**Baarerstrasse 117**
**CH-6300 Zug(CH)**

(72) Erfinder: **Kramer, Felix**
**Im Aemmet 3**
**CH-8964 Friedlisberg(CH)**

(74) Vertreter: **Hotz, Klaus, Dipl.-El.-Ing. / ETH**
**c/o SOUDRONIC AG Industriestrasse 35**
**Postfach 11**
**CH-8962 Bergdietikon(CH)**

(54) **Anlage zum Herstellen und Aufschweissen von Henkelösen auf Platinen für Dosenzargen.**

(57) Auf Platinen (10), die mit einem Platinenförderer (14) schrittweise hintereinander bewegbar sind, sollen je zwei becherförmige Ösen (20) mit zwei einander diametral gegenüberliegenden Lappen (30) orientiert aufgeschweißt werden. Zum Stanzen, Ziehen und Trennen der Ösen (20) aus einem Blechstreifen (36) ist eine Stanzstraße (34) vorgesehen. Die Ösen (20) werden von einem Ösenförderer (60) schrittweise quer zu den Mantellinien (M) der Platinen (10) bewegt. zwei Schweißvorrichtungen (98, 100) zum Aufschweißen beider Lappen (30) der Ösen (20) auf die Platinen (10) sind derart miteinander verbunden und aufeinander abgestimmt bewegbar, daß die Ösen (20) während ihres Transports zu den Schweißvorrichtungen (98, 100) in einer durch das Stanzen festgelegten Orientierung festgehalten und erst freigegeben werden, wenn sie auf eine Platine (10) aufgeschweißt worden sind.

EP 0 437 798 A2

**Fig. 7**

## ANLAGE ZUM HERSTELLEN UND AUFSCHWEISSEN VON HENKELÖSEN AUF PLATINEN FÜR DOSENZARGEN

Gegenstand der Erfindung ist eine Anlage zum Herstellen und Aufschweißen von Henkelösen auf Platinen für Dosenzargen, wobei je zwei becherförmige Ösen mit zwei einander diametral gegenüberliegenden Lappen in Richtung je einer Mantellinie der Dosenzarge orientiert auf eine Platine aufgeschweißt werden.

Aus der EP 0325123 A2 ist es bekannt, auf ebene Platinen für Dosenzargen je zwei becherförmige Henkelösen aufzuschweißen. Die Ösen haben je zwei einander diametral gegenüberliegende Lappen und werden so angeordnet, daß die Lappen in Richtung einer Mantellinie der Dosenzarge orientiert sind, die später aus der Platine hergestellt wird. Die beiden Lappen jeder Öse werden durch elektrisches Widerstandsschweißen an der Platine befestigt.

Der Erfindung liegt die Aufgabe zugrunde, eine automatisch, schnell und mit großer Genauigkeit arbeitende Anlage der genannten Gattung zu schaffen.

Die Aufgabe ist erfindungsgemäß dadurch gelöst, daß

- ein Platinenförderer, mit dem Platinen schrittweise hintereinander bewegbar sind,
- eine Stanzstraße zum Stanzen, Ziehen und Trennen von Ösen aus einem Blechstreifen,
- ein Ösenförderer, mit dem Ösen schrittweise quer zu den Mantellinien der Platinen bewegbar sind, und
- zwei Schweißvorrichtungen zum Aufschweißen beider Lappen der Ösen auf die Platinen

derart miteinander verbunden und aufeinander abgestimmt bewegbar sind, daß die Ösen während ihres Transports zu den Schweißvorrichtungen in einer durch das Stanzen festgelegten Orientierung festgehalten und erst freigegeben werden, wenn sie auf eine Platine aufgeschweißt worden sind.

Vorteilhafte Weiterbildungen der Erfindung ergeben sich aus den Unteransprüchen.

Ein Ausführungsbeispiel der Erfindung wird im folgenden mit weiteren Einzelheiten anhand schematischer Zeichnungen beschrieben. Es zeigen:

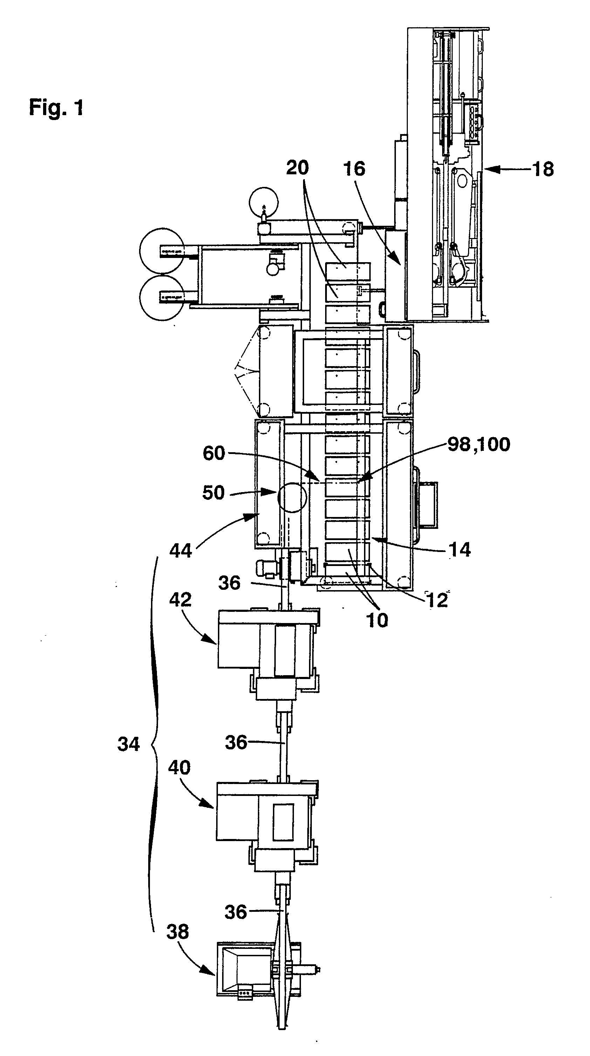

Fig. 1  die Draufsicht einer vollständigen Anlage zum Herstellen und Aufschweißen von Henkelösen auf Platinen sowie zum Weiterverarbeiten der Platinen zu Dosenzargen,

Fig. 2  eine Dosenzarge als Enderzeugnis der Anlage,

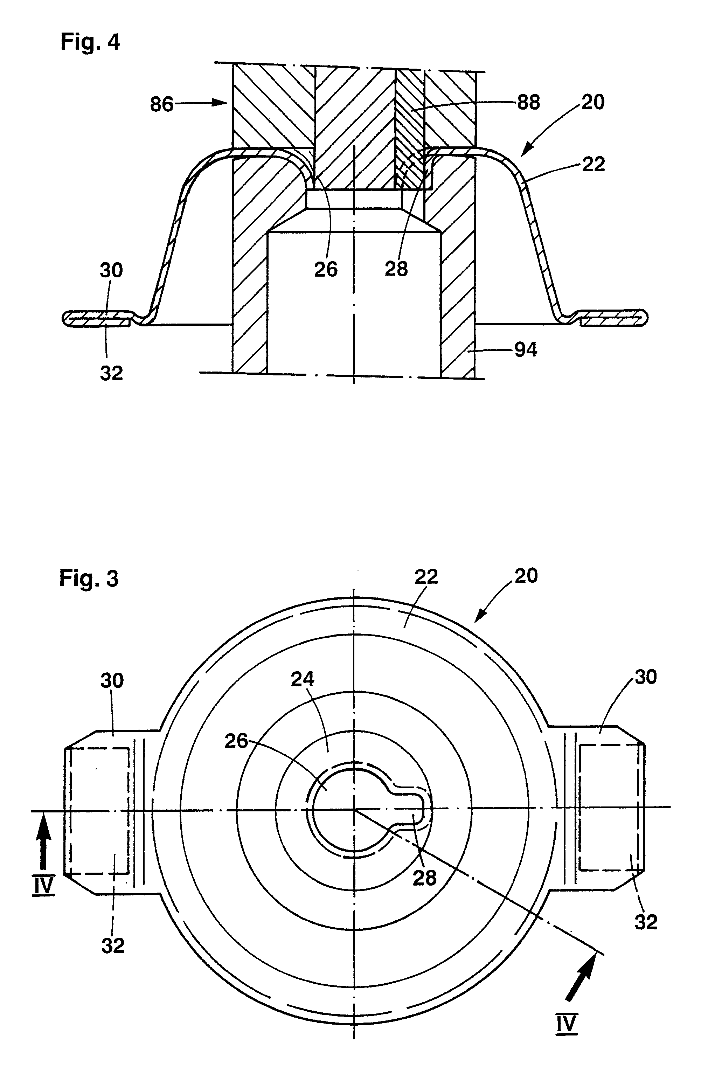

Fig. 3  die Draufsicht einer Öse,

Fig. 4  den Schnitt IV-IV in Fig. 3,

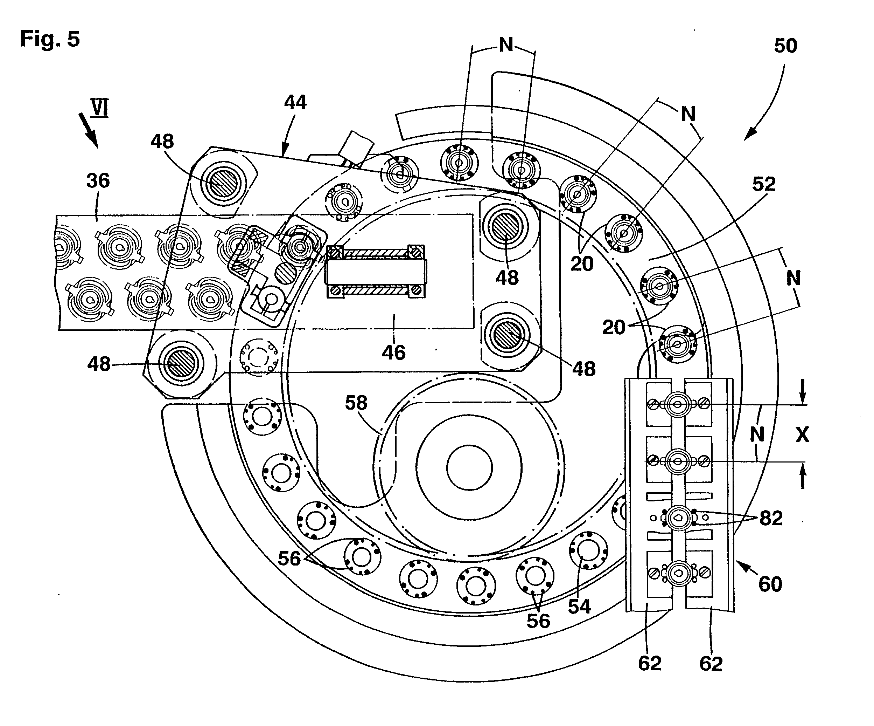

Fig. 5  einen stark vergrößerten Ausschnitt aus Fig. 1, teilweise in einem waagerechten Schnitt gezeichnet,

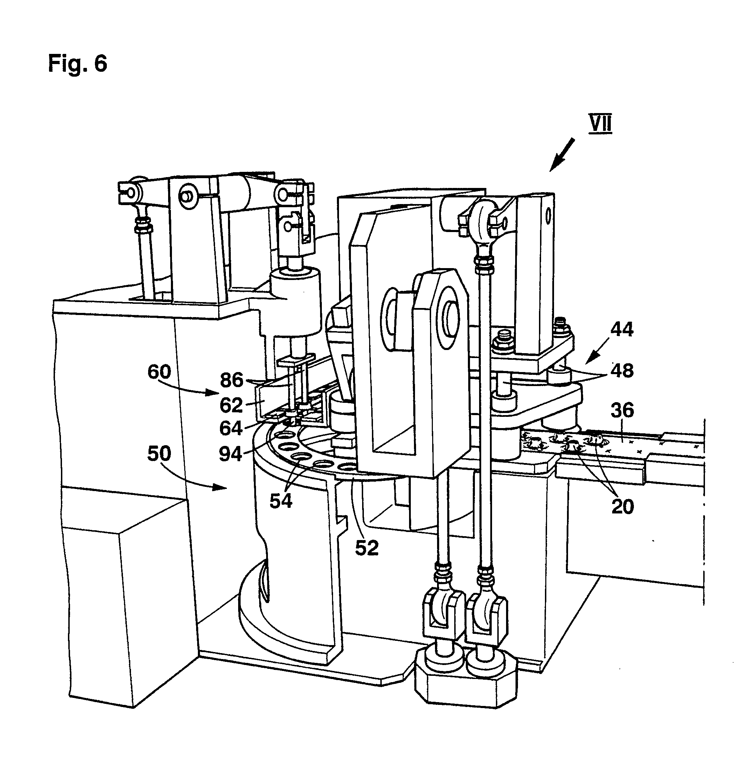

Fig. 6  eine Schrägansicht mit Blickrichtung entsprechend dem Pfeil VI in Fig. 5,

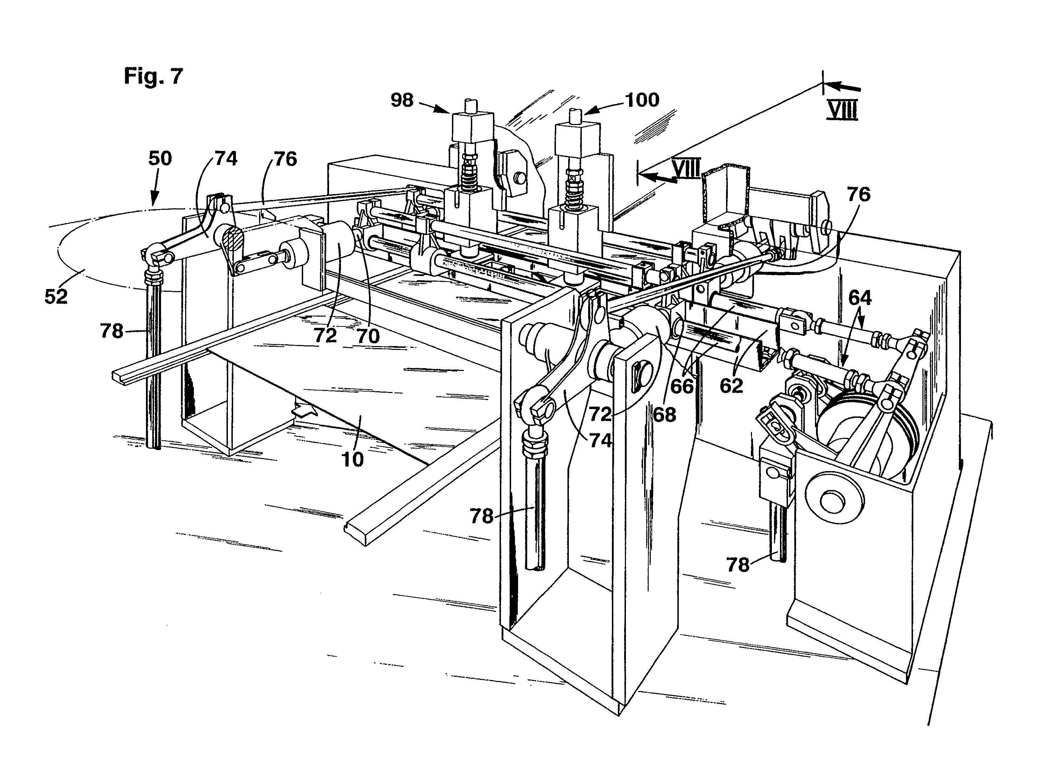

Fig. 7  eine Schrägansicht mit Blickrichtung entsprechend dem Pfeil VII in Fig. 6,

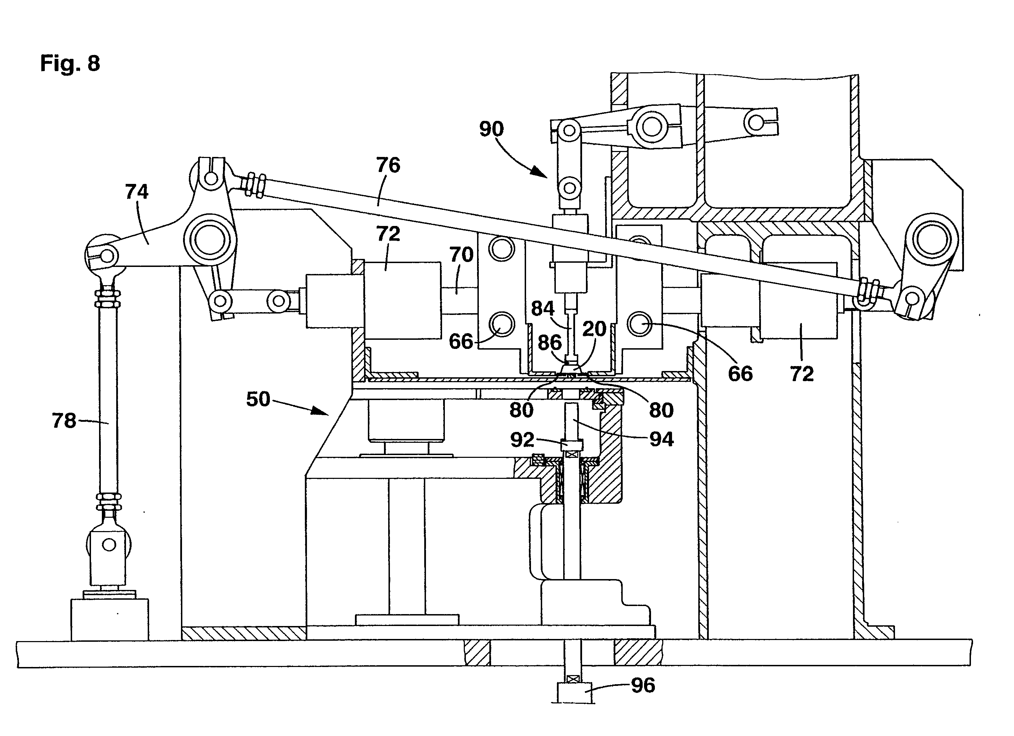

Fig. 8  den senkrechten Schnitt VIII-VIII in Fig. 7,

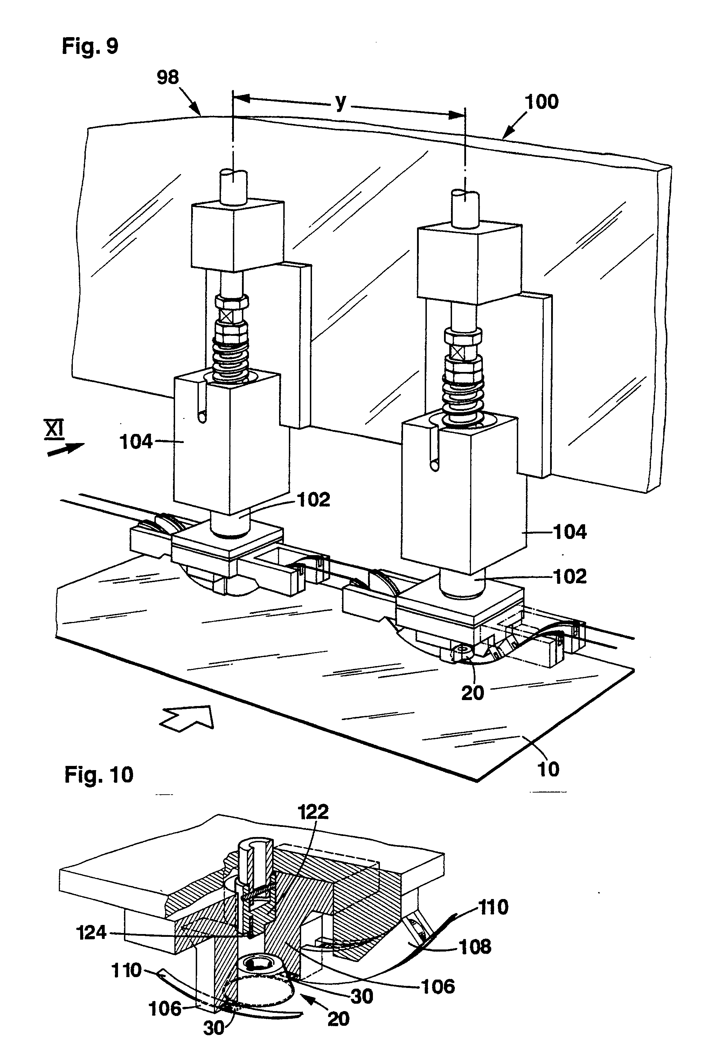

Fig. 9  einen vergrößerten Ausschnitt aus Fig. 7,

Fig. 10 einen weiter vergrößerten Ausschnitt aus Fig. 9, teilweise in senkrechten Ebenen aufgeschnitten,

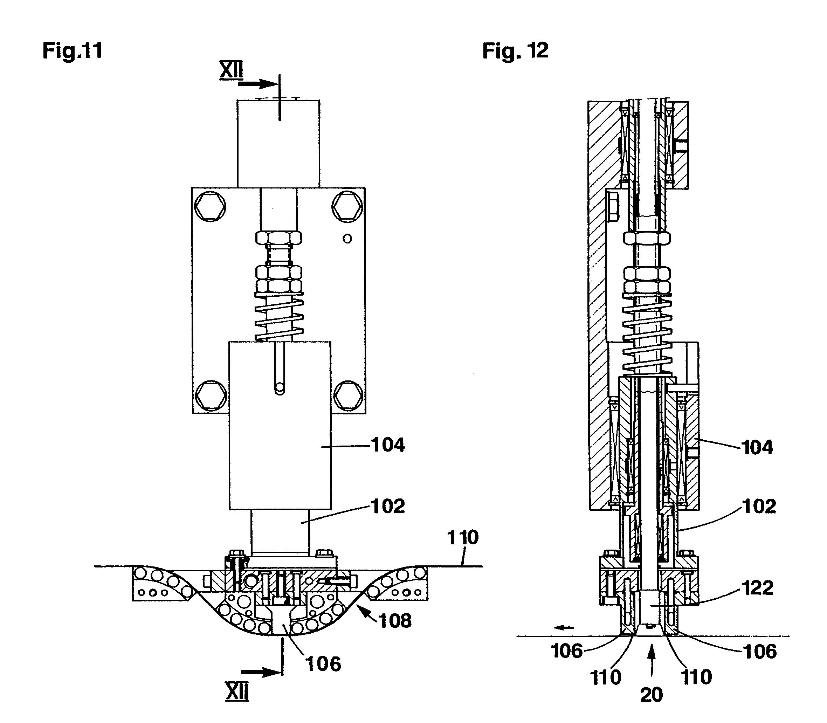

Fig. 11 eine Teilansicht in Richtung des Pfeils XI in Fig. 9,

Fig. 12 den Schnitt XII-XII in Fig. 11,

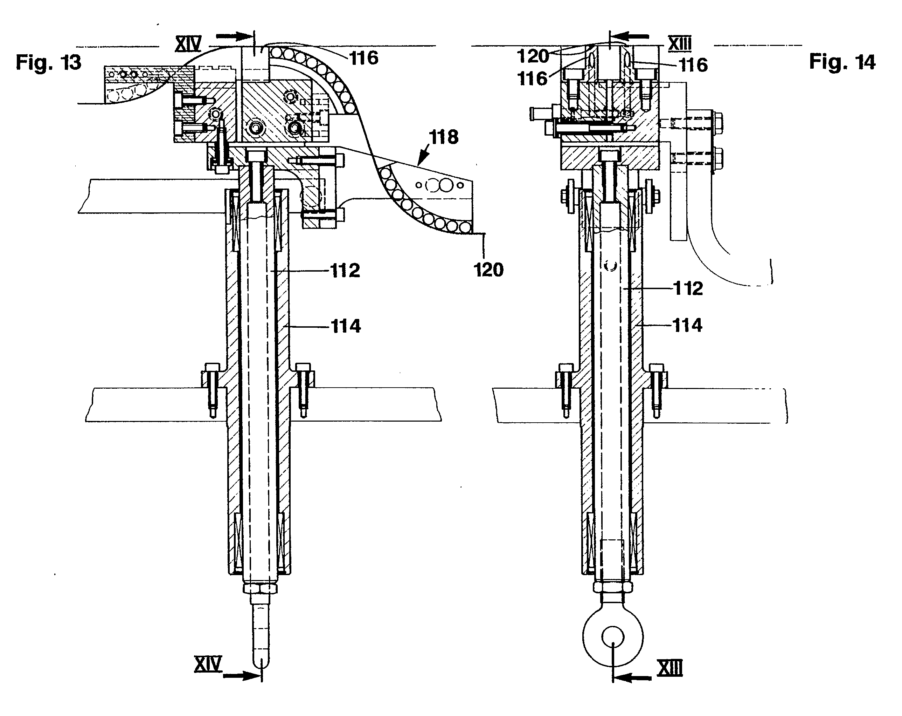

Fig. 13 die Fortsetzung von Fig. XI nach unten, jedoch im Schnitt XIII-XIII in Fig. 14 und

Fig. 14 den Schnitt XIV-XIV in Fig. 13.

Die dargestellte Anlage dient zum Verarbeiten ebener, rechteckiger Platinen 10, die in einem Magazin 12 bereitgehalten werden und von einem schrittweise arbeitenden Platinenförderer 14 einzeln nacheinander weggefördert werden. Am Ende des Platinenförderers 14 erreichen die Platinen 10 eine Rundbiegevorrichtung 16, in der sie zu kreiszylindrischen Dosenzargen gebogen werden. Diese werden einer Schweißmaschine 18 zugeführt, auf der die Längsränder der Dosenzargen miteinander verschweißt werden. Das Magazin 12, der Platinenförderer 14, die Rundbiegevorrichtung 16 und die Schweißmaschine 18 können sämtlich von handelsüblicher Bauart sein und werden deshalb nicht näher beschrieben.

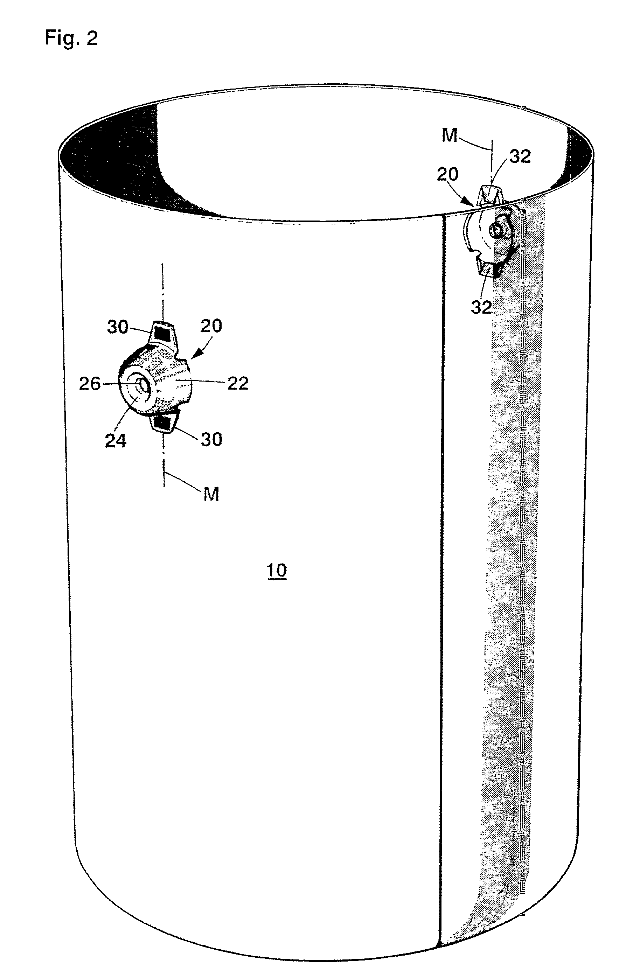

Soweit die Anlage hier von Interesse ist, hat sie die Aufgabe, jede Platine 10, solange sie noch eben ist, mit zwei Ösen 20 zu versehen, in die später, nachdem die betreffende Platine Bestandteil einer fertigen Dose, beispielsweise eines Farbbehälters, geworden ist, ein bügelförmiger Henkel eingehängt werden kann. An jeder einzelnen Platine 10 müssen deshalb die beiden zugehörigen Ösen 20 derart befestigt werden, daß sie voneinander diametral abgewandt sind, wenn aus der Platine 10 gemäß Fig. 2 eine Dosenzarge entstanden ist.

Jede der Ösen 20 hat einen kegelstumpfförmigen Körper 22, der an seiner äußeren Stirnseite eine Vertiefung 24 mit einer zentralen Öffnung 26 zum Einhängen eines hakenförmigen Endes eines nicht dargestellten, üblichen Henkels aus Runddraht aufweist. Die zentrale Öffnung 26 hat eine etwa rechteckige Ausbuchtung 28, die eine Mittelebene definiert. Die beiden Ösen 20, die gemäß Fig. 2 an einer Dosenzarge befestigt sind, haben eine gemeinsame, senkrechte Mittelebene, die das Blech der zur Dosenzarge verarbeiteten Platine 10 in zwei Mantellinien M schneidet.

Jede Öse 20 hat zwei Lappen 30, die einander diametral gegenüber von der Basis des kegelstumpfförmigen Körpers 22 wegragen und je einen umgeschlagenen Endabschnitt 32 aufweisen, so daß ihre Blechdicke verdoppelt ist. Die umgeschlagenen Endabschnitte 32 sind an ihrer Unterseite geriffelt, um besser Voraussetzungen für das Befestigen der Ösen 20 an den Platinen 10 durch elektrisches Widerstandsschweißen zu schaffen.

Die Ösen 20 werden auf einer Stanzstraße 34 aus einem Blechstreifen 36 herausgearbeitet, der von einer Haspel 38 abgezogen wird und parallel zur Förderrichtung des Platinenförderers 14 nacheinander zwei Stanzen 40 und 42 zum Ziehen und Freischneiden der Ösen 20 durchläuft. Die Ösen 20 werden schließlich in einer Trennstanze 44 von einem übrigbleibenden Stanzgitter 46 getrennt, das anschließend zu kleinen Blechstücken zerhackt wird. Um den Blechstreifen 36 möglichst weitgehend auszunützen, werden die Ösen 20 an ihm paarweise schräg nebeneinanderliegend ausgebildet.

Die Trennstanze 44 hat vier Säulen 48, von denen zwei unmittelbar außerhalb und die beiden übrigen innerhalb einer Umlenkvorrichtung 50 stehen, von der die Ösen 20 paarweise in dem Augenblick übernommen werden, in dem sie vom Stanzgitter 46 getrennt werden. Die Umlenkvorrichtung 50 hat einen kreisringförmigen Rundtisch 52, an dessen Oberseite Aufnahmen 54 für je eine Öse 20 paarweise in gleicher Orientierung, d.h. mit parallelen Symmetrieachsen N, angeordnet sind. Rings um jede der Aufnahmen 54 sind Stifte als Halterungen 56 für die Lappen 30 derart angeordnet, daß die Ösen 20 sich nicht verdrehen können. Die Aufnahmen 54 sind durchgehende Bohrungen, so daß die Ösen 20 auch von unten her zugänglich sind.

Bei jedem Arbeitszyklus der Anlage werden zwei Ösen 20 derart vom Stanzgitter 46 getrennt, daß sie in zwei nebeneinander angeordneten Aufnahmen 54 des Rundtisches 52 liegenbleiben. Anschließend wird der Rundtisch 52 von einem Antriebsritzel 58 um einen Winkel gedreht, der dem Abstand zwischen zwei aufeinanderfolgenden Paaren von Aufnahmen 54 entspricht. Dabei gelangt ein Paar Ösen 20, das einige Arbeitszyklen zuvor vom Blechstreifen 36 abgetrennt worden war, in den Arbeitsbereich eines Ösenförderers 60.

Der Ösenförderer 60 hat ein Paar Greiferschienen 62, die sich tangential zum Rundtisch 52 im rechten Winkel zur Längsrichtung der Stanzstraße 34 und zur Förderrichtung des Platinenförderers 14 erstrecken. Die Greiferschienen 62 sind in ihrer Längsrichtung mittels je eines Wirbeltriebs 64 hin- und herbewegbar und sind außerdem zueinander hin und voneinander weg bewegbar. Zu diesem Zweck sind die Greiferschienen 62 an je einer von zwei Führungsstangen 66 befestigt, die in je zwei Führungen 68 längsverschiebbar geführt sind.

Die Führungen 68 sind ihrerseits an je einer Führungsstange 70 befestigt, die sich in Längsrichtung des Platinenförderers 14 und somit quer zu den Greiferschienen 62 erstrecken, in je einer Führung 72 geführt und mittels je eines Winkeltriebs 74 hin- und herbewegbar sind. Die Winkeltriebe 74 sind paarweise einander gegenüberliegend angeordnet und durch Verbindungsstangen 76 derart verbunden, daß die beiden Greiferschienen 62 ihre Bewegungen zueinander hin und voneinander weg stets symmetrisch zu einer senkrechten Längsmittelebene ausführen.

Die Winkeltriebe 64 und 74 sind durch je ein Pleuel 78 mit einer nicht dargestellten Steuerwelle verbunden, von der auch die schrittweise stattfindenden Drehungen des Rundtisches 52 gesteuert werden. Die Stanzen 40 und 42 werden intermittierend von je einem eigenen Motor angetrieben, der vom Durchhang des Blechstreifens 36 vor der betreffenden Stanze gesteuert wird.

Die Greiferschienen 62 haben Aufnahmen 80, die einander paarweise gegenüberliegen. In Längsrichtung der Greiferschienen 62 haben benachbarte Aufnahmen 80 voneinander einen Abstand x, der dem Abstand benachbarter Aufnahmen 54 im Rundtisch 52 entspricht. Den Aufnahmen 80 sind paarweise angeordnete Stifte 82 zugeordnet, zwischen die je ein Lappen 30 derart einlegbar ist, daß die zugehörige Öse 20 in einer Orientierung festgehalten wird, in der sich ihre beide Lappen 30 rechtwinklig zu den Greiferschienen 62 erstrecken. Diese Orientierung ist durch Anordnung der Ösen 20 am Blechstreifen 36 sowie durch den Winkel vorbestimmt, um den die Ösen 20 durch ihren Transport auf dem Rundtisch 52 gedreht werden.

Im dargestellten Beispiel ist die Mittelebene jeder Öse 20 bei deren Ausbildung am Blechstreifen 36 gegenüber dessen Längsrichtung um 30° gedreht. Durch den Transport auf dem Rundtisch 52 werden die Ösen 20 um weitere 150° gedreht mit dem Ergebnis, daß die Längsrichtung der Ösen 20, die den Ösenförderer 60 erreicht haben, genau mit der Förderrichtung des Platinenförderers 14 übereinstimmt, wobei die Ausbuchtung 28 der zentralen Öffnung 26 jeder Öse 20 in bezug auf die Förderrichtung des Platinenförderers 14 nach hinten weist.

Zum Ösenförderer 60 gehört neben den Greiferschienen 62 und zugehörigen Antrieben eine kammartige obere Leiste 84, die in der senkrechten Längsmittelebene des Paars Greiferschienen 62 angeordnet ist und in gleichen Abständen x wie die Aufnahmen 80 angeordnete Oberstempel 86 aufweist. Die Oberstempel 86 passen in die zentrale Öffnung 26 der Ösen 20 und haben je einen seitlichen Vorsprung 88 in der Art einer Paßfeder, der in die Ausbuchtung 28 paßt. Die Leiste 84 ist mittels einer Hubvorrichtung 90 senkrecht auf- und abbeweglich.

Senkrecht unter der Leiste 84 ist eine Leiste 92 mit Unterstempeln 94 angeordnet, die von unten her in die Ösen 20 passen und mittels einer Hubvorrichtung 96 auf- und abbewegbar sind. Die beiden Hubvorrichtungen 90 und 96 sind ausgehend von derselben nicht dargestellten Steuerwelle gesteuert, von der auch die Bewegungen der Pleuel 78 abgeleitet ist.

Zu Beginn jedes Arbeitszyklus stehen die beiden Greiferschienen 62 geöffnet, d.h. mit größtmöglichem Abstand voneinander, über dem Rundtisch 52. Durch aufeinander abgestimmte Hubbewegungen zweier Oberstempel 86 und der darunter angeordneten Unterstempel 94 werden zwei Ösen 20 aus ihren Aufnahmen 54 im Rundtisch 52 herausgehoben und gelangen in die Höhe der beiden ersten Aufnahmenpaare 80 der Greiferschienen 62. Nun werden die Greiferschienen 62 zueinander hin bewegt, so daß sie die beiden Ösen 20 erfassen. Anschließend werden die Oberstempel 86 und Unterstempel 94 voneinander weg bewegt, so daß sie die Ösen 20 freigeben. Daraufhin führen die beiden Greiferschienen 62 eine Längsbewegung um die Strecke 2x in Richtung zum Platinenförderer 14 hin aus. Anschließend werden die beiden kammartigen Leisten 84 und 92 zueinander hin bewegt, so daß die Ösen 20 von je einem Oberstempel 86 und Unterstempel 94 festgehalten werden. Sodann werden die Greiferschienen 62 wieder geöffnet und um die Strecke 2x in ihre Ausgangsstellung zurückbewegt.

Der Ösenförderer 60 erstreckt sich durch die Arbeitsbereiche zweier Schweißvorrichtungen 98 und 100. Diese sind in einem Abstand y voneinander angeordnet, der mit dem halben Umfang der fertigen Dosenzarge übereinstimmt und ein ganzzahliges, jedoch ungeradzahliges Vielfaches des Abstandes x beträgt. Auf diese Weise ist dafür gesorgt, daß die beiden Schweißvorrichtungen 98 und 100 bei jedem Arbeitszyklus von je einer Öse 20 erreicht werden.

Die beiden Schweißvorrichtungen 98 und 100 sind vollständig gleich; sie haben je einen oberen Stößel 102, der in einer oberen Stößelführung 104 auf- und abbeweglich ist und ein Paar obere Elektroden 106 sowie ein Paar obere Drahtführungen 108 trägt. An den Drahtführungen 108 ist je ein oberer Elektrodendraht 110 geführt. Jede der beiden Schweißvorrichtungen 98 und 100 hat ferner einen unteren Stößel 112, der in einer unteren Stößelführung 114 auf- und abbeweglich geführt ist und ein Paar Elektroden 116 sowie ein Paar Drahtführungen 118 trägt. Die beiden Drahtführungen 118 führen je einen unteren Elektrodendraht 120 derart, daß jeder von ihnen mit einem der beiden oberen Elektrodendrähte 110 in einer gemeinsamen senkrechten Ebene angeordnet ist, die sich parallel zu den Greiferschienen 62 und somit im rechten Winkel zur Förderrichtung des Platinenförderers 14 erstreckt.

Sämtliche Elektrodendrähte 110, 120 werden bei jedem Arbeitszyklus der Anlage um ein keines Stück weiterbewegt; zu diesem Zweck ist jedem der Elektrodendrähte 110 und 120 eine Gruppe nicht dargestellter Rollen zugeordnet, von denen wenigstens eine von einem Schrittschaltgetriebe intermittierend angetrieben ist. Solche Rollenanordnungen sind bei elektrischen Widerstands-Schweißmaschinen bekannt und deshalb im vorliegenden Zusammenhang nicht erläuterungsbedürftig.

Zwischen den beiden oberen Elektroden 106 jeder der beiden Schweißvorrichtungen 98 und 100 ist ein Stempel 122 angeordnet, der in die zentrale Öffnung 26 der Ösen 20 paßt und einen in deren Ausbuchtung 28 passenden seitlichen Vorsprung 124 aufweist. Jeder der Stempel 122 ist derart gesteuert, daß er dem zugehörigen oberen Elektrodenpaar 106 bei dessen Arbeitshub voraneilt und jeweils eine Öse 20 zentriert und in ihrer vorgegebenen Winkelstellung festhält.

Bei jedem Arbeitszyklus erreicht eine Platine 10 eine genau vorbestimmte Stellung zwischen den oberen Stößeln 102 und den unteren Stößeln 112 der beiden Schweißvorrichtungen 98 und 100, und gleichzeitig erreichen zwei Ösen 20, die auf diese Platinen 10 aufgeschweißt werden sollen, ihre genau vorbestimmten Stellungen. Die Greiferschienen geben die beiden Ösen 20 erst dann frei, wenn in jede von ihnen einer der Stempel 122 eingetaucht ist. Anschließend werden durch weitere gegenseitige Annäherung der zusammengehörigen oberen und unteren Stößel 102 und 112 die Elektroden 106 und 116 gegen die Elektrodendrähte 110 bzw. 120 gepreßt mit der Folge, daß diese mit dem erforderlichen Schweißdruck gegen die Lappen 30 bzw. gegen die Unterseite der Platine 10 gedrückt werden und elektrische Widerstandsschweißungen unter üblichen Bedingungen bewirken.

**Patentansprüche**

1. Anlage zum Herstellen und Aufschweißen von Henkelösen (20) auf Platinen (10) für Dosenzargen, wobei je zwei becherförmige Ösen (20) mit zwei einander diametral gegenüberliegenden Lappen (30) in Richtung je einer Mantellinie (M) der Dosenzarge orientiert auf eine Platine (10) aufgeschweißt werden, dadurch **gekennzeichnet**, daß

- ein Platinenförderer (14), mit dem Platinen (10) schrittweise hintereinander bewegbar sind,
- eine Stanzstraße (34) zum Stanzen, Ziehen und Trennen von Ösen (20) aus einem Blechstreifen (36),
- ein Ösenförderer (60), mit dem Ösen (20) schrittweise quer zu den Mantellinien (M) der Platinen (10) bewegbar sind, und
- zwei Schweißvorrichtungen (98, 100) zum Aufschweißen beider Lappen (30) der Ösen (20) auf die Platinen (10) derart miteinander verbunden und aufeinander abgestimmt bewegbar sind, daß die Ösen (20) während ihres Transports zu den Schweißvorrichtungen (98, 100) in einer durch das Stanzen festgelegten Orientierung festgehalten und erst freigegeben werden, wenn sie auf eine Platine (10) aufgeschweißt worden sind.

2. Anlage nach Anspruch 1,
dadurch **gekennzeichnet**, daß der Platinenförderer (14) die Platinen (10) in Richtung der Mantellinien (M) der Dosenzargen fördert, und
- der Ösenförderer (60) sich quer zum Platinenförderer (14) erstreckt.

3. Anlage nach Anspruch 2,
dadurch **gekennzeichnet**, daß
- die Stanzstraße (34) sich parallel zum Platinenförderer (14) erstreckt und mindestens eine Stanze (40) zum Ausbilden der Ösen (20) in einem Stanzgitter (46) sowie eine Trennstanze (44) zum Trennen der Ösen (20) vom Stanzgitter (46) aufweist, und
- der Trennstanze (44) eine Umlenkvorrichtung (50) zugeordnet ist, die Aufnahmen (54) für je eine Öse (20) aufweist und im Takt der Stanzhübe in Richtung zum Ösenförderer (60) bewegbar ist.

4. Anlage nach Anspruch 3,
dadurch **gekennzeichnet**, daß die Umlenkvorrichtung (50) einen Rundtisch (52) aufweist, in dem die Aufnahmen (54) paarweise in gleichmäßigen Umfangsabständen auf einem Kreis ausgebildet sind, und
- der Ösenförderer (60) sich tangential zu diesem Kreis erstreckt.

5. Anlage nach Anspruch 3 oder 4,
dadurch **gekennzeichnet**, daß
- den Aufnahmen (54) Halterungen (56) für die Lappen (30) zugeordnet sind,
- die Halterungen (56) zusammen mit der zugehörigen Aufnahme (54) eine Achse (N) definieren, die einer Symmetrieebene der in ihnen aufgenommenen Öse (20) entspricht, und
- die Achsen (N) zweier unmittelbar aufeinanderfolgender Aufnahmen (54) parallel sind.

6. Anlage nach einem der Ansprüche 1 bis 5,
dadurch **gekennzeichnet**, daß
- der Ösenförderer (60) zwei parallele Greiferschienen (62) mit in Längsabständen angeordneten, einander paarweise gegenüberliegenden und paarweise je eine Öse (20) aufnehmenden Aufnahmen (80) aufweist,
- die Schweißvorrichtungen (98, 100) einen Abstand (y) voneinander haben, der ein ganzzahliges Vielfaches des Abstandes (x) zwischen aufeinanderfolgenden Aufnahmen (80) an den Greiferschienen (54) ist,
- die Greiferschienen (62) im Takt von Arbeitshüben der Schweißvorrichtungen (98, 100) quer zu ihrer Längsrichtung zueinander hin bewegbar sind, um jeweils zwei neue Ösen (20) zu erfassen,
- die Greiferschienen (62) dann in ihrer Längsrichtung um eine Strecke (2x) bewegbar sind, die doppelt so groß ist wie der Abstand (x) zwischen aufeinanderfolgenden Aufnahmen (80),
- die Greiferschienen (62) daraufhin auseinander bewegbar sind, um die Ösen (20) freizugeben und sich leer in ihrer Längsrichtung zurückzubewegen, und
- zum Festhalten der Ösen (20) bei auseinanderbewegten Greiferschienen (62) eine Unterstützung eine Reihe von Oberstempeln (86) vorgesehen sind, die in Richtung zur Unterstützung hin und von ihr weg bewegbar sind.

7. Anlage nach Anspruch 6,
dadurch **gekennzeichnet**, daß die Oberstempel (86) je einen seitlichen Vorsprung (88) aufweisen, der in eine Ausbuchtung (28) einer zentralen Öffnung (26) der Ösen (20) eingreift und dadurch die Ösen (20) hindert, sich bei geöffneten Greiferschienen (62) zu drehen.

8. Anlage nach Anspruch 6 oder 7,
dadurch **gekennzeichnet**, daß die Unterstützung von einer Reihe auf- und abbeweglicher Unterstempel (94) gebildet ist.

**Fig. 1**

Fig. 2

**Fig. 4**

86   →    88    20

22

30

32

26    28

94

**Fig. 3**

22    20

30    24    30

26

28

IV

32      32

IV

Fig. 5

EP 0 437 798 A2

**Fig. 6**

**Fig. 7**

EP 0 437 798 A2

Fig. 8

**Fig. 9**

98

100

y

XI

104

102

104

102

20

10

**Fig. 10**

122

124

110

108

110

106

30

106

30

20

106

Fig. 12

Fig.11

Fig. 13

Fig. 14

XIV

XIII

116

120

116

116

118

120

112

112

114

114

XIV

XIII

EP 0 437 798 A2